# EUROPÄISCHE PATENTANMELDUNG

(11) **EP 2 220 972 A1**
(43) Veröffentlichungstag der Anmeldung: **25.08.2010**
(21) Anmeldenummer: 09405034.1
(22) Anmeldetag: 24.02.2009
(51) Int. Cl.: A47J 31/44

(54) **Abgabevorrichtung für Milch und/oder Milchschaum und eine Kaffeemaschine mit einer derartigen Abgabevorrichtung**

(71) Anmelder: Jura Elektroapparate AG, 4626 Niederbuchsiten (CH)
(72) Erfinder: Büttiker, Philipp, 4625 Oberbuchsiten (CH)
(74) Vertreter: EGLI-EUROPEAN PATENT ATTORNEYS

(57) **Zusammenfassung**

Die Abgabevorrichtung(10) für Milch und/oder Milchschaum umfasst eine Mischeinrichtung (11) zum Mischen von Dampf, Milch und/oder Luft, wobei die Mischeinrichtung (11) aufweist: eine Unterdruckkammer (19), eine erste Leitung (15) zur Zufuhr von Milch in die Unterdruckkammer (19), eine zweite Leitung (16) zur Zufuhr von Dampf in die Unterdruckkammer (19), eine dritte Leitung (17) zur Zufuhr von Luft in die Unterdruckkammer (19), mindestens einen Auslauf (30, 30.1) zur Abgabe der Milch und/oder des Milchschaums aus der Unterdruckkammer (19), ein eine verstellbare Reglerachse (22) aufweisendes Ventil (21) zum Regulieren der Zufuhr der Milch und/oder der Luft in die Unterdruckkammer (19), wobei durch Verstellen der Reglerachse (22) zwischen verschiedenen vorgegebenen Stellungen zumindest ein Fluss von Milch an- und abschaltbar und/oder veränderbar und ein Fluss von Luft an- und abschaltbar und/oder veränderbar ist. Die Abgabevorrichtung (10) umfasst weiterhin einen Antriebsmotor(25) zum Verstellen der Reglerachse (22) des Ventils (21) und eine Steuervorrichtung (35) zum Steuern des Antriebsmotors (25), wobei die Reglerachse (22) durch Steuern des Antriebsmotors (25) mittels der Steuervorrichtung (35) in die jeweiligen vorgegebenen Stellungen bringbar ist.

## Beschreibung

Die Erfindung bezieht sich auf eine Abgabevorrichtung für Milch und/oder Milchschaum und eine Kaffeemaschine mit einer derartigen Abgabevorrichtung.

In bekannten Abgabevorrichtungen für Milch und/oder Milchschaum wird gewöhnlich Milch mit Dampf (insbesondere Wasserdampf) und gegebenenfalls Luft gemischt, um erwärmte Milch oder Milchschaum bzw. ein Gemisch von erwärmter Milch und Milchschaum herzustellen. Derartige Abgabevorrichtungen werden häufig auch in Kaffeemaschinen integriert, zumal Kaffeemaschinen meist auch eine Einrichtung zur Erzeugung von Wasserdampf umfassen. Kaffeemaschinen mit einer integrierten Abgabevorrichtung für Milch und/oder Milchschaum ermöglichen es bekanntlich, wahlweise Kaffee (ohne Zusatz von Milch) oder erwärmte Milch (ohne Zusatz von Kaffee) oder Milchkaffee (ohne Zusatz von Milchschaum) oder Kaffeespezialitäten, die Milchschaum oder geschäumte Milch enthalten (beispielsweise Cappuccino oder Latte Macchiato), herzustellen.

Bei Abgabevorrichtungen für Milch und/oder Milchschaum, die in Verbindung mit Kaffeemaschinen Verwendung finden, wird meist mit einem Dampfstrahl in einer geeignet geformten Düse ("Venturi-Düse") ein Unterdruck erzeugt ("Venturi-Effekt"), welcher es ermöglicht, aus einem mit Milch gefüllten Vorratsbehälter (Milchbehälter) eine Portion Milch über eine Leitung zwischen der Düse und dem Vorratsbehälter anzusaugen und in die Düse zu leiten. Um lediglich erwärmte Milch (ohne Milchschaum) herzustellen, kann die angesaugte Milch in einer Unterdruckkammer der jeweiligen Abgabevorrichtung mit dem in die Düse injizierten Dampf vermischt und dadurch erwärmt werden. Anschliessend kann das derart erzeugte Milch-Dampf-Gemisch in Form eines beruhigten Ausgangsstrahls aus der Abgabevorrichtung über einen Auslass in ein geeignetes Gefäss abgegeben werden. Um Milchschaum bzw. geschäumte Milch herzustellen, kann mit dem Dampfstrahl zusätzlich Luft angesaugt (beispielsweise über eine für die Umgebungsluft durchgängige Leitung) und in der Unterdruckkammer mit der jeweils angesaugten Milch vermischt werden. In dieser Variante kann ein Milch-Dampf-Luft-Gemisch in Form eines beruhigten Ausgangsstrahls aus der Unterdruckkammer über den Auslass in ein geeignetes Gefäss abgegeben werden, wobei sich in diesem Fall eine Mischung von erwärmter Milch und Milchschaum in dem Gefäss sammelt.

Bisher wurden mehrere auf einer Vermischung von Milch, Dampf und Luft beruhende Abgabevorrichtungen für Milch und/oder Milchschaum der vorstehend genannten Art vorgeschlagen, die es einem Benutzer erlauben, Milch und/oder Milchschaum in verschiedenen Varianten herzustellen.

Aus EP 1 115 317 B1 ist beispielsweise eine Abgabevorrichtung zur Erzeugung von Milchschaum bekannt, bei welcher ein Fluss der jeweils von einem Dampfstrahl angesaugten Milch mit einem Ventil, welches in einer Leitung zur Zufuhr von Milch angeordnet ist und eine manuell verstellbare Reglerachse zum Regulieren einer Zufuhr von Milch umfasst, durch eine manuelle Einstellung der Reglerachse vorgewählt bzw. durch eine manuelle Verstellung der Reglerachse verändert werden kann. Im vorliegenden Fall ist die Reglerachse ein verstellbarer Körper mit einer Durchgangsbohrung für die Milch. Durch eine geeignete Einstellung der Reglerachse kann ein Benutzer die mithilfe eines Dampfstrahls angesaugte Menge Milch beeinflussen bzw. begrenzen. Die jeweils angesaugte und mit der Milch vermischte Luft kann bei dieser Abgabevorrichtung nicht gezielt beeinflusst werden. Diese Abgabevorrichtung hat den Nachteil, dass die Möglichkeit, verschiedene Varianten von Milch bzw. Milchschaum herzustellen, eingeschränkt ist. Dadurch, dass lediglich die Menge der angesaugten Milch durch eine Verstellung der Reglerachse veränderbar ist, kann ein Benutzer mit dieser Abgabevorrichtung lediglich Milch aufschäumen und dabei bestenfalls die Menge und die Temperatur des erzeugten Milchschaums bzw. des erzeugten Gemischs von erwärmter Milch und Milchschaum beeinflussen. Eine Verwendung dieser Abgabevorrichtung in Verbindung mit einer Kaffeemaschine ist deshalb für einen Benutzer extrem umständlich im Hinblick auf eine Herstellung von Kaffeespezialitäten, welche auf einer Kombination von Kaffee, Milch und/oder Milchschaum beruhen, zumal der Benutzer vor der Herstellung einer bestimmten Kaffeespezialität in der Regel erst einmal die seinen Wünschen entsprechende optimale Stellung der Reglerachse des Ventils experimentell ermitteln muss. Hierfür sind in der Kegel mehrere Versuche nötig. In diesem Zusammenhang ist nachteilig, dass eine manuelle Verstellung der Reglerachse in der Regel zeitaufwändig und nur ungenau reproduzierbar ist. Es ist deshalb für einen Benutzer umständlich, verschiedene Varianten von Milchschaum bzw. eines Gemischs von erwärmter Milch und Milchschaum bzw. verschiedene Varianten von Kaffeespezialitäten herzustellen.

Aus EP 1 688 074 B1 ist weiterhin eine auf einer Vermischung von Milch, Dampf und Luft beruhende Abgabevorrichtung zur Erzeugung von Milchschaum und von erwärmter Milch bekannt, bei welcher eine Einlassöffnung für Luft in einer Leitung zur Zufuhr von Luft mit einem Ventil zur Kontrolle der Luftzufuhr wahlweise geöffnet oder geschlossen werden kann. Ein Verschlusskörper des Ventils kann mit Hilfe eines Elektromotors bewegt werden, um durch Ansteuern des Elektromotors wahlweise das Ventil zu öffnen und auf diese Weise die Zufuhr von Luft zu ermöglichen oder das Ventil zu schliessen und auf diese Weise die Zufuhr von Luft zu unterbinden. Die Abgabevorrichtung weist weiterhin eine Leitung zur Zufuhr von Milch auf, wobei ein Benutzer keine Möglichkeit hat, einen Fluss von Milch durch diese Leitung zu regulieren (d.h. abzuschalten, anzuschalten bzw. zu variieren). Bei dieser Abgabevorrichtung kann deshalb ein Benutzer mit einem Dampfstrahl eine vorgegebene Menge Milch ansaugen und dabei die angesaugte Luft entweder mit dem Dampf und einer vorgegebenen Menge Luft mischen (sofern das Ventil zur Kontrolle der Luftzufuhr geöffnet ist) oder nur mit dem Dampf mischen (sofern das Ventil zur Kontrolle der Luftzufuhr geschlossen ist). Bei dieser Abgabevorrichtung hat ein Benutzer lediglich die Möglichkeit, durch Betätigung des Ventils zwei verschiedene Varianten von Milchgetränken herzustellen: eine vorgegebene Menge erwärmte Milch ohne Anteile von Milchschaum (bei geschlossenem Ventil) oder eine vorgegebene Menge geschäumte Milch mit einer vorgegebenen Konsistenz (bei geöffnetem Ventil). Auch diese Abgabevorrichtung hat deshalb den Nachteil, dass die Möglichkeit, verschiedene Varianten von Milch bzw. Milchschaum herzustellen, eingeschränkt ist. In Verbindung mit einer Kaffeemaschine bietet diese Abgabevorrichtung deshalb einem Benutzer ebenfalls wenig Wahlfreiheit bei der Herstellung von Kaffeespezialitäten, welche auf einer Kombination von Kaffee, Milch und/oder Milchschaum beruhen.

Der vorliegenden Erfindung liegt die Aufgabe zugrunde, die genannten Nachteile zu vermeiden und eine Abgabevorrichtung für Milch und/oder Milchschaum zu schaffen, welche in der Lage ist, eine grosse Anzahl verschiedener Varianten von Milchgetränken auf der Basis von Milch und/oder Milchschaum auf einfache Weise wiederholt mit jeweils vorbestimmten Eigenschaften und mit jeweils vorbestimmter Qualität reproduzierbar herzustellen. Die Abgabevorrichtung soll auch in Verbindung mit einer Kaffeemaschine verwendbar sein.

Diese Aufgabe wird gelöst durch eine Abgabevorrichtung mit den Merkmalen des Patentanspruchs 1.

Diese Abgabevorrichtung umfasst eine Mischeinrichtung zum Mischen von Dampf, Milch und/oder Luft, welche Mischeinrichtung aufweist: eine Unterdruckkammer, eine erste Leitung zur Zufuhr von Milch in die Unterdruckkammer, eine zweite Leitung zur Zufuhr von Dampf in die Unterdruckkammer, eine dritte Leitung zur Zufuhr von Luft in die Unterdruckkammer, mindestens einen Auslauf zur Abgabe der Milch und/oder des Milchschaums aus der Unterdruckkammer und ein eine verstellbare Reglerachse aufweisendes Ventil zum Regulieren der Zufuhr der Milch und/oder der Luft in die Unterdruckkammer, wobei durch Verstellen der Reglerachse zwischen verschiedenen vorgegebenen Stellungen zumindest ein Fluss von Milch an- und abschaltbar und/oder veränderbar und ein Fluss von Luft an- und abschaltbar und/oder veränderbar ist.

Unter "Unterdruckkammer" wird in diesem Zusammenhang eine Kammer verstanden, in der durch Zufuhr des Dampfes in die genannte Kammer ein Druck erzeugbar ist, welcher geringer ist als der Druck in der ersten Leitung und/oder der Druck in der zweiten Leitung und/oder der Druck in der dritten Leitung (Venturi Prinzip).

Gemäss der Erfindung umfasst die Abgabevorrichtung einen Antriebsmotor zum Verstellen der Reglerachse des Ventils und eine Steuervorrichtung zum Steuern des Antriebsmotors, wobei die Reglerachse durch Steuern des Antriebsmotors mittels der Steuervorrichtung in die jeweiligen vorgegebenen Stellungen bringbar ist.

Die erfindungsgemässe Abgabevorrichtung ermöglicht es, eine Zufuhr von Dampf durch die zweite Leitung in die Unterdruckkammer zu veranlassen und - abhängig von der jeweiligen Stellung der Reglerachse - Milch und/oder Luft mit jeweils unterschiedlichen Flussraten über die erste Leitung bzw. die zweite Leitung in die Unterdruckkammer zu injizieren und die jeweils in der Unterdruckkammer erzeugte Mischung von Dampf, Milch und/oder Luft über den Auslauf abzugeben.

Dadurch, dass durch Verstellen der Reglerachse (d.h. durch Verstellen eines einzigen Elements) sowohl der Durchfluss von Milch durch die erste Leitung als auch der Durchfluss von Luft durch die dritte Leitung veränderbar ist, ermöglicht es die Abgabevorrichtung, auf einfache Weise eine grosse Vielfalt verschiedener Mischungen von Dampf, Milch und/oder Luft zu realisieren und über den Auslauf abzugeben.

Dadurch, dass die Abgabevorrichtung einen Antriebsmotor zum Verstellen der Reglerachse des Ventils und cine Stouervorrichtung zum Steuern des Antriebsmotors aufweist und die Reglerachse durch Steuern des Antriebsmotors mittels der Steuervorrichtung in verschiedene vorgegebene Stellungen bringbar ist, ist es möglich, die Reglerachse automatisch mit einer vorbestimmten Geschwindigkeit und einer grossen Genauigkeit in die verschiedenen vorgegebenen Stellungen zu bringen und auf diese Weise die jeweils gewünschten Mischungen von Dampf, Milch und/oder Luft zu realisieren.

Die verschiedenen vorgegebenen Stellungen der Reglerachse können in der Steuerung gespeichert sein. Die Steuerung ist bevorzugt so ausgebildet, dass jede der vorgegebenen Stellungen von einem Benutzer ausgewählt und auf Befehl des Benutzers angesteuert werden kann. Demnach ermöglicht es die Abgabevorrichtung, eine grosse Anzahl verschiedener Varianten von Milchgetränken auf der Basis von Milch und/oder Milchschaum auf einfache Weise in einer beliebigen Reihenfolge, mit einer beliebigen Anzahl von Wiederholungen mit jeweils vorbestimmten Eigenschaften und mit jeweils vorbestimmter Qualität reproduzierbar herzustellen.

Die Mischeinrichtung kann auch so ausgebildet sein, dass die Milch bzw. der Milchschaum mit weiteren Zusatzstoffen, beispielsweise Schokolade und/oder Kakao, vermischt werden kann.
Die Abgabevorrichtung kann separat zur Herstellung von Milchgetränken auf der Basis von Milch und/oder Milchschaum oder in Verbindung mit Vorrichtungen zur Herstellung von anderen Getränken verwendet werden. In Verbindung mit einer Kaffeemaschine bietet diese Abgabevorrichtung einem Benutzer die Möglichkeit, eine grosse Vielfalt von Kaffeespezialitäten, welche auf einer Kombination von Kaffee, Milch und/oder Milchschaum beruhen, herzustellen.

In einer Ausführungsform der Abgabevorrichtung ist eine Antriebsachse des Antriebsmotors über eine lösbare Verbindung an die Reglerachse gekoppelt. In einer bevorzugten Variante dieser Ausführungsform ist die Mischeinrichtung nach Lösen der lösbaren Verbindung als Ganzes von den übrigen Teilen der Milchabgabevorrichtung entfernbar. Diese Massnahmen erleichtern es, die Abgabevorrichtung und insbesondere die Mischeinrichtung zu reinigen, um beispielsweise die Abgabevorrichtung bzw. die Mischeinrichtung nach einer Benutzung von Milchrückständen zu befreien und so die üblichen hygienischen Standards einhalten zu können.

Die erfindungsgemässe Abgabevorrichtung kann beispielsweise in Kombination mit einer Kaffeemaschine verwendet werden und zu diesem Zweck in der Umgebung eines Kaffeeauslaufkopfes der jeweiligen Kaffeemaschine angeordnet werden. Unter "Kaffeeauslaufkopf" wird in diesem Zusammenhang eine Baugruppe verstanden, die zumindest einen Auslauf oder mehrere Ausläufe zur Abgabe eines Kaffeegetränks und eine Tragstruktur, welche die jeweiligen Ausläufe an einer vorgegebenen Position an der Kaffeemaschine hält, umfasst.

Die Abgabevorrichtung kann vorzugsweise derart an einer Kaffeemaschine angeordnet werden, dass die Mischeinrichtung an einer Aussenseite eines Gehäuses der Kaffeemaschine angeordnet ist. Dies hat den Vorteil, dass alle Leitungen, welche Milch (beispielsweise aus einem Vorratsbehälter für Milch) zur Mischeinrichtung führen, ausschliesslich an der Aussenseite des Gehäuses der Kaffeemaschine angeordnet werden können, so dass keine Milch in den vom Gehäuse umgrenzten Innenraum der Kaffeemaschine geführt werden muss. Auf diese Weise kann vermieden werden, dass Milchrückstände im Innenraum der Kaffeemaschine entstehen können. Alle Leitungen, welche die Milch zur Mischeinrichtung führen, sind deshalb leicht zugänglich und können mit wenig Aufwand kontrolliert und gegebenenfalls entfernt, ausgetauscht oder gereinigt werden.

In einer weiteren Variante der vorstehend genannten Kaffeemaschine ist der Kaffeeauslaufkopf an der Aussenseite des Gehäuses der Kaffeemaschine angeordnet und die Abgabevorrichtung am Kaffeeauslaufkopf befestigt. In diesem Fall bilden der Kaffeeauslaufkopf und die Abgabevorrichtung eine kompakte Einheit. Der jeweilige Kaffeeauslaufkopf und die Abgabevorrichtung werden bevorzugt derart nahe beieinander angeordnet, dass ein vom Kaffeeauslaufkopf abgegebenes Kaffeegetränk und die jeweils von der Abgabevorrichtung abgegebene Milch bzw. der jeweils von der Abgabevorrichtung abgegebene Milchschaum gleichzeitig oder zeitlich nacheinander in dasselbe Gefäss laufen können, ohne die Position des Gefässes relativ zum Kaffeeauslaufkopf oder relativ zur Abgabevorrichtung verändern zu müssen.

In einer weiteren Variante der vorstehend genannten Kaffeemaschine umfasst der Kaffeeauslaufkopf ein Gehäuse, in welchem die Mischeinrichtung untergebracht ist. Dies hat den Vorteil, dass die Mischeinrichtung vor Verschmutzung geschützt ist und ein Benutzer daran gehindert werden kann, die Mischeinrichtung im Betrieb der Kaffeemaschine zu berühren. Letzteres verhindert insbesondere unbeabsichtigte Berührungen der mit heissem Dampf beaufschlagten Teile der Mischeinrichtung und schützt somit einen Benutzer vor Verbrennungen der Haut.

In einer bevorzugten Ausführungsform ist der Kaffeeauslaufkopf derart an der Kaffeemaschine angeordnet, dass die Mischeinrichtung von der Aussenseite des Gehäuses der Kaffeemaschine her zugänglich und als Ganzes von der Kaffeemaschine separierbar ist. Dies hat den Vorteil, dass die Mischeinrichtung nach Gebrauch leicht entfernt und gereinigt werden kann.

In einer weiteren Ausführungsform ist die Abgabevorrichtung relativ zum Gehäuse der Kaffeemaschine derart platziert, dass der Antriebsmotor im Innern des Gehäuses der Kaffeemaschine angeordnet ist und die Antriebsachse des Antriebsmotors und/oder die Reglerachse und/oder ein die Antriebsachse und die Reglerachse verbindendes Getriebe oder eine die Antriebsachse und die Reglerachse verbindende Kupplung durch eine Öffnung im Gehäuse der Kaffeemaschine ragt. Diese Variante hat den Vorteil, dass einerseits der Antriebsmotor durch das Gehäuse verdeckt und geschützt ist und andererseits die Mischeinrichtung ausserhalb des Gehäuses platziert sein kann. Somit beansprucht die Abgabevorrichtung ausserhalb des Gehäuses weniger Platz, wobei die Mischeinrichtung von der Aussenseite des Gehäuses der Kaffeemaschine zugänglich bleibt und deshalb leicht zugänglich ist und mit wenig Aufwand kontrolliert und gegebenenfalls entfernt, ausgetauscht oder gereinigt werden kann.

In einer weiteren Variante der vorstehend genannten Kaffeemaschinen sind der Kaffeeauslaufkopf und die Abgabevorrichtung relativ zum Gehäuse der Kaffeemaschine bewegbar angeordnet, wobei eine Höhenlage des Kaffeeauslaufkopfes und eine Höhenlage der Abgabevorrichtung simultan veränderbar sind. Dadurch können die jeweiligen Höhenlagen des Kaffeeauslaufkopfes und der Abgabevorrichtung auf einfache Weise gemeinsam optimal an die Höhe des jeweiligen Gefässes angepasst werden, in welches Kaffee bzw. Milch und/oder Milchschaum aus dem Kaffeeauslaufkopf bzw. der Abgabevorrichtung ausgegeben werden soll.

Weitere Einzelheiten der Erfindung und insbesondere beispielhafte Ausführungsformen der erfindungsgemässen Abgabevorrichtung für Milch und/oder Milchschaum werden im Folgenden anhand der beigefügten Zeichnungen erläutert. Es zeigen:
- Fig. 1: eine Kaffeemaschine mit einem Kaffeeauslaufkopf in Kombination einer Abgabevorrichtung für Milch und/oder Milchschaum gemäss der Erfindung, wobei die Abgabevorrichtung teilweise in einem Gehäuse des Kaffeeauslaufkopfes untergebracht ist;
- Fig. 2: die Abgabevorrichtung und das Gehäuse des Kaffee- auslaufkopfes gemäss Fig. 1, in einem vertikalen Schnitt;
- Fig. 3: die Abgabevorrichtung und der Kaffeeauslaufkopf gemäss Fig. 1 in einem horizontalen Schnitt.

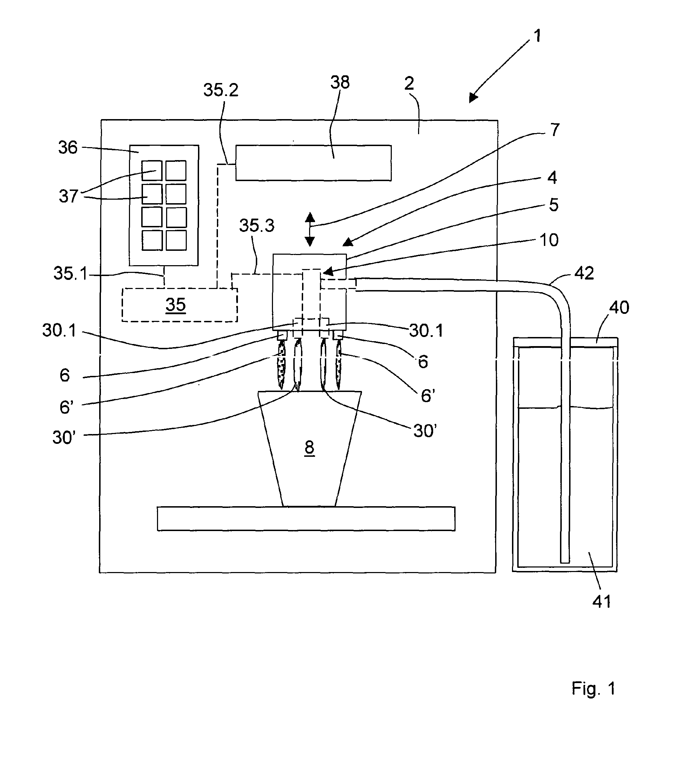

Fig. 1 zeigt eine Frontansicht einer Kaffeemaschine 1, welche zur Bereitung einer Vielzahl verschiedener Getränke und zu diesem Zweck insbesondere zur Bereitung von Kaffee, erwärmter Milch und geschäumter Milch und zur Bereitung von Kaffeespezialitäten, welche gegebenenfalls Milch und/oder Milchschaum enthalten, ausgelegt ist. An der Vorderseite eines Gehäuses 2 der Kaffeemaschine 1 ist ein Kaffeeauslaufkopf 4 zur Abgabe eines Kaffeegetränks angebracht. Im vorliegenden Beispiel umfasst der Kaffeeauslaufkopf 4 zwei Kaffeeausläufe 6 zur Abgabe eines Kaffeegetränks und ein mit den Kaffeeausläufen 6 verbundenes Gehäuse 5. Die Kaffeeausläufe 6 und das Gehäuse 5 sind höhenverstellbar angeordnet und zu diesem Zweck (mittels in den Fig. 1-3 nicht dargestellten Führungsmitteln) am Gehäuse 2 der Kaffeemaschine 1 in Richtung einer Vertikalen geführt, wie in Fig. 1 durch einen Doppelpfeil 7 angedeutet ist. Auf diese Weise ist es möglich, die Höhenlage des Kaffeeauslaufkopfes 4 relativ zu einem Gefäss 8, welches zur Aufnahme eines über die Kaffeeausläufe 6 abgegebenen Kaffeegetränks vorgesehen ist und zu diesem Zweck unterhalb der Kaffeeausläufe 6 platziert ist, geeignet anzupassen. Wie in Fig. 1 dargestellt, verlässt das jeweils abgegebene Kaffeegetränk den jeweiligen Kaffeeauslauf 6 in Form eines Kaffeestrahls 6'.

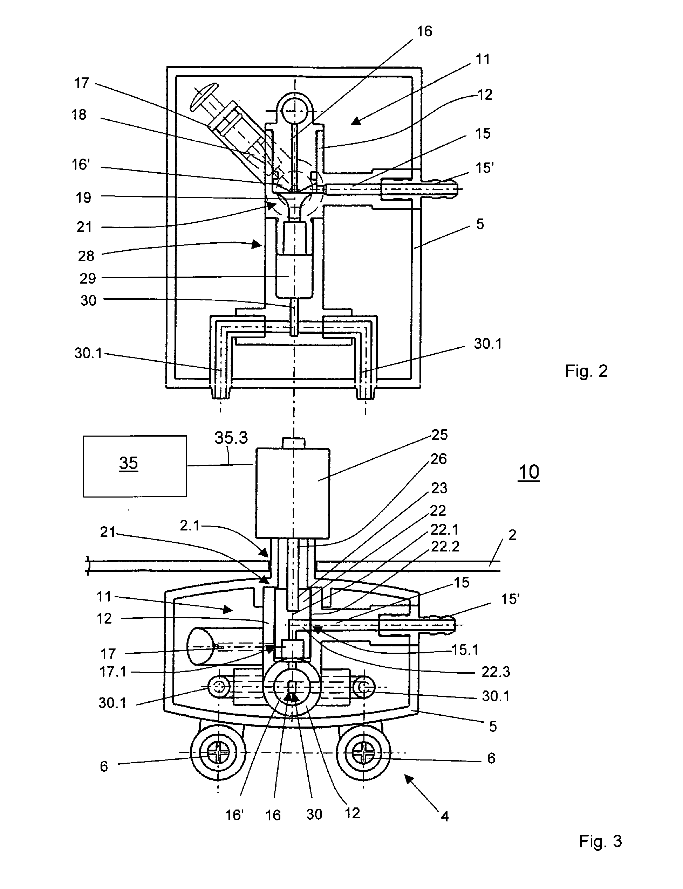

An der Vorderseite des Gehäuses 2 der Kaffeemaschine 1 ist weiterhin eine erfindungsgemässe Abgabevorrichtung 10 für Milch und/oder Milchschaum angeordnet. Im vorliegenden Beispiel ist die Abgabevorrichtung 10 am Kaffeeauslaufkopf 4 befestigt und zumindest teilweise von dem Gehäuse 5 des Kaffeeauslaufkopfes 4 umschlossen, wie im Folgenden im Zusammenhang mit Fig. 3 noch näher erläutert wird. Da die Abgabevorrichtung 10 am Kaffeeauslaufkopf 4 befestigt ist, ist die Abgabevorrichtung 10 zusammen mit dem Kaffeeauslaufkopf 4 relativ zum Gefäss 8 höhenverstellbar.

Wie Fig. 1 zeigt, ist im Innern der Kaffeemaschine 1 eine Steuervorrichtung 35 untergebracht, welche alle von der Kaffeemaschine ausführbaren Prozesse steuert, insbesondere die Bereitung und Abgabe der jeweils gewünschten Kaffeegetränke und die Abgabe von Milch und/oder Milchschaum. Die an der Bereitung und der Abgabe der jeweiligen Kaffeegetränke beteiligten Komponenten der Kaffeemaschine 1 sind in Fig. 1-3 (abgesehen vom Kaffeeauslaufkopf 4) nicht dargestellt.

Die Kaffeemaschine 1 kann im Betrieb von einem Benutzer mithilfe eines am Gehäuse 2 angeordneten Bedienfeldes 36 bedient werden, welches mehrere (im vorliegenden Beispiel acht) manuell betätigbare Tasten 37 umfasst und mit der Steuervorrichtung 35 über eine Leitung 35.1 zur Übermittlung von Daten und/oder Steuersignalen verbunden ist. Jeder einzelnen Taste 37 ist ein spezifischer, von der Kaffeemaschine ausführbarer Prozess zugeordnet. Durch betätigen der jeweiligen Tasten 37 kann ein Benutzer insbesondere aus einer vorgegebenen Liste mehrerer verschiedener Getränke, die mittels der Kaffeemaschine 1 zubereitbar sind, das jeweils gewünschte Getränk auswahlen und die Zubereitung dieses Cetränks veranlassen.

Die Steuervorrichtung 35 ist weiterhin über eine Leitung 35.2 zur Übermittlung von Daten und/oder Steuersignalen mit einer Anzeige 38 verbunden, um durch eine Übermittlung entsprechender Daten und/oder Steuersignalen eine Wiedergabe von Informationen über den jeweiligen Betriebszustand der Kaffeemaschine mittels der Anzeige 38 veranlassen zu können.

Wie Fig. 1 weiterhin andeutet, ist die Steuervorrichtung 35 über eine Leitung 35.3 zur Übermittlung von Daten und/oder Steuersignalen mit der Abgabevorrichtung 10 für Milch und/oder Milchschaum verbunden, um eine Abgabe von Milch und/oder Milchschaum steuern zu können (wie im Zusammenhang mit den Fig. 2 und 3 noch näher erläutert wird).

Im vorliegenden Beispiel ist ein Behälter 40, welcher einen Milchvorrat 41 enthält, neben der Kaffeemaschine 1 angeordnet. Um die Herstellung eines Milch und/oder Milchschaum enthaltenden Getränks zu ermöglichen, ist die Abgabevorrichtung 10 mit dem Behälter 40 über einen in den Milchvorrat 41 eintauchenden Schlauch 42 verbunden. Bei Bedarf kann - veranlasst durch die Steuervorrichtung 35 - eine Portion Milch aus dem Milchvorrat 41 über den Schlauch 42 angesaugt und auf diese Weise für eine Zufuhr von Milch zur Abgabevorrichtung 10 gesorgt werden. Wie Fig. 1 andeutet, verfügt die Abgabevorrichtung 10 über zwei Ausläufe 30.1, über welche Milch und/oder Milchschaum in Form eines Milch- bzw. Milchschaum-Strahls 30' aus der Abgabevorrichtung 10 abfliessen kann, beispielsweise in das Gefäss 8 (Fig. 1). So ist es möglich gleichzeitig zwei Gefässe 8 auf gleiches Füllniveau zu befüllen.

Der Schlauch 42 bzw. ein in den Milchvorrat 41 eintauchender Abschnitt des Schlauches 42 kann auch durch eine Lanze bzw. eine Rohrleitung ersetzt werden. Der Behälter 40 kann mit Kühlvorrichtung (zum Kühlen des Behälters 40 bzw. zum Kühlen des Milchvorrats 41) und mit einer thermischen Isolierung (gegenüber der Umgebung des Behälters 40) ausgestattet sein, um den Milchvorrat 41 frisch halten zu können.

Wie Fig. 1 andeutet, verläuft der Schlauch 42 an einer Aussenseite des Gehäuses direkt zu der Abgabevorrichtung 10. Die Abgabevorrichtung ist im vorliegenden Beispiel ebenfalls derart angeordnet, dass die der Abgabevorrichtung 10 zugeführte Milch nicht in das Innere der Kaffeemaschine 1 geführt werden muss. Auf diese Weise ist ausgeschlossen, dass Milchrückstände im Innenraum der Kaffeemaschine 1 entstehen können. Alle Teile, welche mit der Milch in Berührung kommen, sind deshalb leicht zugänglich und können mit wenig Aufwand kontrolliert und gegebenenfalls entfernt, ausgetauscht oder gereinigt werden.

Anhand der Fig. 2 und 3 werden im Folgenden weitere Einzelheiten der Abgabevorrichtung 10 erläutert.

Wie aus den Fig. 2 und 3 hervorgeht, umfasst die Abgabevorrichtung 10 u.a. eine Mischeinrichtung 11 zum Mischen von Dampf, Milch und/oder Luft. Die Mischeinrichtung 11 umfasst ein Gehäuse 12, in welchem angeordnet bzw. ausgebildet sind:
- eine Unterdruckkammer 19,
- eine erste Leitung 15 zur Zufuhr von Milch in die Unterdruckkammer 19,
- eine zweite Leitung 16 zur Zufuhr von Dampf in die Unterdruckkammer 19,
- eine dritte Leitung 17 zur Zufuhr von Luft in die Unterdruckkammer 19,
- eine Auslaufeinrichtung 28 für Milch und/oder Milchschaum, welche eine mit der Unterdruckkammer 19 verbundene Emulsionskammer 29 zur Aufnahme eines in der Unterdruckkammer 19 erzeugten Gemischs aus Dampf, Milch und/oder Luft und eine Bohrung 30 für den Austritt von Milch und/oder Milchschaum aus der Emulsionskammer 29 (bzw. der Mischeinrichtung 11) aufweist, wobei die Bohrung 30 im vorliegenden Beispiel in die beiden Ausläufe 30.1 für die Milch und/oder den Milchschaum mündet, und
- ein eine verstellbare Reglerachse 22 aufweisendes Ventil 21 zum Regulieren der Zufuhr der Milch und/oder der Luft in die Unterdruckkammer 19.

Die erste Leitung 15 kann über einen Adapter 15' mit dem Schlauch 42 verbunden werden, um eine Zufuhr von Milch aus dem Behälter 40 zu gewährleisten.

Die zweite Leitung 16 ist mit einem (in Fig. 1-3 nicht dargestellten) Dampferzeuger der Kaffeemaschine 1 verbunden, um gegebenenfalls Dampf in die zweite Leitung einleiten zu können.

Wie Fig. 2 andeutet, ist die dritte Leitung 17 an dem von der Unterdruckkammer 19 entfernten Ende offen und ermöglicht an diesem Ende den Eintritt von Umgebungsluft in die Leitung 17. Die dritte Leitung ist allerdings mit einem Rückschlagventil 18 (beispielsweise in Form eines Membranventils) versehen, um zu gewährleisten, dass einerseits Umgebungsluft durch ein im Rückschlagsventil 18 ausgebildetes (die Zufuhr von Luft begrenzendes) Luftloch in die dritte Leitung 17 und somit in die Unterdruckkammer 19 der Mischeinrichtung 11 eindringen kann, andererseits aber verhindert wird, dass die der Mischeinrichtung 11 zugeführte Milch über die dritte Leitung 17 entweichen und gegebenenfalls das genannte Luftloch verschmutzen und somit die Zufuhr von Luft über die dritte Leitung 17 unkontrollierbar beeinträchtigen kann.

Wie Fig. 2 andeutet, mündet die zweite Leitung 16 im vorliegenden Beispiel in die Unterdruckkammer 19 über eine Düse 16', welche derart geformt ist, dass Dampf, welcher aus der Leitung 16 über die Düse 16' in die Unterdruckkammer 19 einströmt, in der Unterdruckkammer 19 (gemäss dem Venturi-Effekt) einen Unterdruck erzeugt. Da die erste Leitung 15 (für Milch) und die dritte Leitung 17 (für Luft) ebenfalls über die Unterdruckkammer 19 in die Auslaufeinrichtung 28 münden, verursacht ein in die Unterdruckkammer 19 über die zweite Leitung 16 injizierter Dampfstrahl eine Sogwirkung in der ersten Leitung 15 und in der dritten Leitung 17 und sorgt dafür, dass (ohne Mitwirkung weiterer Pumpen) Milch über die erste Leitung 15 und gegebenenfalls Luft über die dritte Leitung 17 in die Unterdruckkammer 19 gesaugt und dort mit dem Dampf vermischt bzw. verwirbelt werden können, um die Milch zu erwärmen (falls keine Luft über die dritte Leitung 17 zugeführt wird) oder die Milch durch eine Verwirbelung mit Luft aufzuschäumen und ein Gemisch aus erwärmter Milch und Milchschaum herzustellen (falls Luft über die dritte Leitung 17 zugeführt wird).

Die Reglerachse 22 des Ventils 21 ist im vorliegenden Fall als ein zylindrischer Körper ausgebildet, welcher an Innenwänden des Gehäuses 11 derart gelagert ist, dass die Reglerachse 22 um ihre Längsachse 22.1 drehbar ist und somit durch Drehungen um die Längsachse 22.1 verstellt werden kann.

Wie Fig. 3 entnehmbar ist, münden die erste Leitung 15 und die dritte Leitung 17 unmittelbar an einer äusseren Mantelfläche 22.2 der Reglerachse 22 in den Innenraum des Gehäuses 12, wobei in Fig. 3 das Bezugszeichen 15.1 die entsprechende Mündung der ersten Leitung 15 und das Bezugszeichen 17.1 die entsprechende Mündung der dritten Leitung 17 bezeichnet. Demgemäss kann die Reglerachse 22 die Mündung 15.1 und/oder die Mündung 17.1 verschliessen und somit eine Zufuhr von Milch über die erste Leitung 15 in die Unterdruckkammer 19 und/oder eine Zufuhr von Luft über die dritte Leitung 17 in die Unterdruckkammer 19 verhindern, wenn nicht in der Reglerachse 22 ausgebildete Kanäle eine durchgängige Verbindung zwischen der ersten Leitung 15 und der Unterdruckkammer 19 bzw. zwischen der dritten Leitung 17 und der Unterdruckkammer 19 herstellen.

Um zu ermöglichen, dass eine Zufuhr von Milch in die Unterdruckkammer 19 durch Verstellen der Reglerachse 22 (d.h. durch eine Drehung um die Längsachse 22.1 um einen bestimmten Drehwinkel) regulierbar ist, ist in der Reglerachse ein Kanal 22.3 ausgebildet, der zur äusseren Mantelfläche 22.2 der Reglerachse 22 hin geöffnet ist und an der Mündung 15.1 einen Durchgang zwischen der ersten Leitung 15 und Unterdruckkammer 19 bildet, wobei der Querschnitt dieses Durchgangs von der jeweiligen (Winkel-) Stellung der Reglerachse 22 abhängig ist. Im Beispiel gemäss Fig. 3 überlappen der Kanal 22.3 und die erste Leitung 15 an der Mündung 15.1 derart, dass der Querschnitt des Durchgangs zwischen der ersten Leitung 15.1 und der Unterdruckkammer 19 maximal ist und somit eine Zufuhr von Milch durch den Kanal 22.3 mit maximaler Flussrate ermöglicht wird. Bei einer Drehung der Reglerachse 22 um die Längsachse 22.1 um einen bestimmten Drehwinkel kann der Querschnitt des Durchgangs zwischen der ersten Leitung 15 und der Unterdruckkammer 19 verändert und insbesondere um ein vorgegebenes Mass reduziert werden, dessen Grösse von der Form und der Anordnung des Kanals 22.3, von der Form und der Anordnung der ersten Leitung 15 und dem jeweiligen Drehwinkel abhängt. Dementsprechend kann durch Verstellen der Reglerachse 22 zwischen verschiedenen vorgegebenen Stellungen ein Fluss von Milch durch die erste Leitung 15 in die Unterdruckkammer 19 verändert und gegebenenfalls an- und abgeschaltet werden.

Auf analoge Weise ist in der Reglerachse 22 ein weiterer (in Fig. 1-3 nicht dargestellter) Kanal ausgebildet, welcher einen Durchgang zwischen der dritten Leitung 17 und der Unterdruckkammer 19 schafft, dessen Querschnitt als Funktion des Drehwinkels der Reglerachse 22 veränderbar ist. Dementsprechend kann ein Fluss von Luft durch die dritte Leitung 17 in die Unterdruckkammer 19 durch Verstellen der Reglerachse 22 zwischen verschiedenen vorgegebenen Stellungen verändert und gegebenenfalls an- und abgeschaltet werden.

Wie Fig. 3 zeigt, ist die Abgabevorrichtung 10 mit einem Antriebsmotor 25 (beispielweise einem Schrittmotor) ausgestattet, welcher mittels der Steuervorrichtung 35 über die Leitung 35.3 ansteuerbar ist und dazu dient, die Reglerachse 22 des Ventils 21 um die Längsachse 22.1 unter Kontrolle der Steuervorrichtung 35 zu drehen und dadurch zu verstellen.

Der Antriebsmotor 25 weist eine Antriebsachse 26 auf, welche axial zur Längsachse 22.1 der Reglerachse 22 angeordnet ist. Die Antriebsachse 26 ist bevorzugt lösbar an die Drehachse 22.1 gekoppelt, um die Mischeinrichtung 11 auf möglichst einfache Weise von dem Kaffeeauslaufkopf 4 bzw. der Kaffeemaschine 1 separieren zu können. Im vorliegenden Beispiel weist die Reglerachse 22 an einem Ende eine axiale Bohrung 23 auf, in welche die Antriebsachse 26 in Richtung der Längsachse 22.1 formschlüssig einführbar ist. Um eine Kopplung zwischen der Antriebsachse 26 und der Reglerachse 22 zu realisieren, wird die Mischeinrichtung 11 derart auf die Antriebsachse 26 aufgesetzt, dass ein Ende der Antriebsachse 26 in die Bohrung 23 ragt. Um die Stabilität der Kopplung zu verbessern, kann die Reglerachse 22 gegebenenfalls mit (in Fig. 1-3 nicht dargestellten) Befestigungsmitteln an der Antriebsachse 22 fixiert werden.

Das Ventil 21 ist derart ausgebildet, dass durch ein Verdrehen (Verstellen) der Reglerachse 22 zwischen mehreren vorgegebenen Stellungen sowohl die Zufuhr von Milch durch die erste Leitung 15 als auch die Zufuhr von Luft durch die dritte Leitung 17 variiert werden kann. Auf diese Weise können Milch und Luft in unterschiedlichen Mengen gemischt werden, wobei das Mischungsverhältnis zwischen Milch und Luft über einen grossen Bereich (beispielsweise zwischen 100% und 0%) variiert werden kann.

Die jeweiligen vorgegebenen Stellungen sind in der Steuervorrichtung 35 gespeichert und können mithilfe des Antriebsmotors 25 unter Kontrolle der Steuervorrichtung 35 automatisch, schnell und mit der jeweils gewünschten Genauigkeit reproduzierbar angefahren werden.

In einer Variante sind drei verschiedene vorgegebene Stellungen vorgesehen:
- In einer ersten Stellung der Reglerachse 22 (Ruhestellung) ist die Zufuhr von Milch in die Unterdruckkammer 19 verschlossen und die Zufuhr von Luft in die Unterdruckkammer 19 ist offen (mit maximalem Durchgang zwischen der dritten Leitung 17 und der Unterdruckkammer 19).
- In einer zweiten Stellung der Reglerachse 22 (Stellung Milchschaum) ist die Zufuhr von Milch und die Zufuhr von Luft in die Unterdruckkammer 19 offen (mit maximalem Durchgang zwischen der ersten Leitung 15 und der Unterdruckkammer 19 und mit maximalem Durchgang zwischen der dritten Leitung 17 und der Unterdruckkammer 19.
- In einer dritten Stellung der Reglerachse 22 (Stellung Milch) ist die Zufuhr von Milch gedrosselt (relativ zum maximalen Durchgang zwischen der ersten Leitung 15 und der Unterdruckkammer 19) und die Zufuhr von Luft in die Unterdruckkammer 19 ist geschlossen.

In einer weiteren Variante sind weitere vorgegebene Stellungen vorgesehen, welche als Zwischenstellungen bezüglich der vorstehend genannten Stellungen der Reglerachse 22 angesehen werden können. Ausgehend von der genannten dritten Stellung (Stellung Milch) können beispielsweise Zwischenstellungen definiert werden, bei denen die Zufuhr von Milch unterschiedlich stark gedrosselt ist (relativ zum maximalen Durchgang zwischen der ersten Leitung 15 und der Unterdruckkammer 19). Durch eine Verstellung der Reglerachse 22 zwischen diesen Zwischenstellungen ist es möglich, Milch (ohne Zusatz von Milchschaum) auf unterschiedliche Temperaturen zu bringen.

Ausgehend von der genannten zweiten Stellung (Stellung Milchschaum) können beispielsweise Zwischenstellungen definiert werden, bei denen die Zufuhr von Luft unterschiedlich stark gedrosselt ist (relativ zum maximalen Durchgang zwischen der dritten Leitung 17 und der Unterdruckkammer 19). Durch eine Verstellung der Reglerachse 22 zwischen diesen Zwischenstellungen ist es möglich, die Konsistenz des jeweils erzeugten Milchschaums durch eine Variation des relativen Anteils der mit der Milch vermischten Luft zu verändern.

Weiterhin ist es möglich, ausgehend von der genannten zweiten Stellung und der genannten ersten Stellung, Zwischenstellungen zu definieren, bei denen sowohl die Zufuhr von Milch als auch die Zufuhr von Luft unterschiedlich stark gedrosselt sind (relativ zum maximalen Durchgang zwischen der ersten Leitung 15 und der Unterdruckkammer 19 bzw. relativ zum maximalen Durchgang zwischen der dritten Leitung 17 und der Unterdruckkammer 19). Durch eine Verstellung der Reglerachse 22 zwischen diesen Zwischenstellungen ist es möglich, die Temperatur und die Konsistenz der jeweils erzeugten geschäumten Milch zu verändern.

Bei der Kaffeemaschine 1 sind mehreren verschiedenen Tasten 37 jeweils verschiedene vorgegebene Stellungen der Reglerachse 22 zugeordnet. Ein Benutzer der Kaffeemaschine kann deshalb durch eine Betätigung einer der Tasten 37 die jeweils gewünschte Stellung der Reglerachse 22 vorwählen und die Abgabevorrichtung 10 dazu veranlassen, Dampf, Milch und gegebenenfalls Luft entsprechend der ausgewählten Stellung der Reglerachse zu mischen.

Im Falle der Kaffeemaschine 1 ist es möglich, mittels der Steuervorrichtung 35 die Abgabe eines Kaffeegetränks zu veranlassen und die Reglerachse 22 vor, während oder nach der Abgabe des Kaffeegetränks in mindestens eine der vorgegebenen Stellungen zu bringen. Weiterhin ist die Steuervorrichtung 35 derart ausgebildet, dass die Reglerachse 22 vor, während oder nach der Abgabe des Kaffeegetränks zeitlich nacheinander in verschiedene vorgegebene Stellung bringbar ist. Diese Massnahmen erlauben es, eine grosse Vielfalt von Kaffeespezialitäten, welche Milch und/oder Milchschaum enthalten, automatisch herzustellen.

Wie Fig. 3 zeigt, ist der Antriebsmotor 25 im Innern des Gehäuses 2 der Kaffeemaschine 1 angeordnet ist, während die Mischeinrichtung 11 an der Aussenseite des Gehäuses 2 angeordnet ist. Auf diese Weise beansprucht die Abgabevorrichtung 10 besonders wenig Platz. Um eine Kopplung zwischen der Reglerachse 22 und der Antriebsachse 26 des Antriebsmotors 25 zu ermöglichen, weist das Gehäuse 2 eine Öffnung 2.1 auf, durch welche die Antriebsachse 2 in den Raum ausserhalb der Kaffeemaschine 1 ragt. Die Antriebsachse 26 ragt weiterhin in das Gehäuse 5 des Kaffeeauslaufkopfes 4 und ist deshalb innerhalb des Gehäuses 5 an die Reglerachse 22 koppelbar.

Um die Mischeinrichtung 11 entfernen zu können, muss das Gehäuse 5 geöffnet werden, beispielsweise durch Entfernen einzelner Segmente des Gehäuses 5. Anschliessend ist die Mischeinrichtung 11 frei zugänglich und kann von der Antriebsachse 22 und dem Adapter 15' getrennt und als Ganzes von der Kaffeemaschine 1 entfernt werden.

Alternativ können die Antriebsachse 26 des Antriebsmotors 25 und/oder die Reglerachse 22 und/oder ein die Antriebsachse 26 und die Reglerachse 22 verbindendes Getriebe oder eine die Antriebsachse 26 und die Reglerachse 22 verbindende Kupplung derart angeordnet sein, dass sie durch eine Öffnung im Gehäuse 2 der Kaffeemaschine 1 ragen. Gemäss einer weiteren Alternative kann der Antrieb 25 auch im Gehäuse 5 untergebracht werden, sofern der Platz im Gehäuse hierfür ausreicht.

## Patentansprüche

1. Abgabevorrichtung (10) für Milch und/oder Milchschaum, mit einer Mischeinrichtung (11) zum Mischen von Dampf, Milch und/oder Luft, welche Mischeinrichtung (11) umfasst:
a) eine Unterdruckkammer (19),
b) eine erste Leitung (15) zur Zufuhr von Milch in die Unterdruckkammer (19),
c) eine zweite Leitung (16) zur Zufuhr von Dampf in die Unterdruckkammer (19),
d) eine dritte Leitung (17) zur Zufuhr von Luft in die Unterdruckkammer (19),
e) mindestens einen Auslauf (30, 30.1) zur Abgabe von Milch und/oder Michschaum aus der Unterdrukkammer 19,
f) ein eine verstellbare Reglerachse (22) aufweisendes Ventil (21) zum Regulieren der Zufuhr der Milch und/oder der Luft in die Unterdruckkammer (19), wobei durch Verstellen der Reglerachse (22) zwischen verschiedenen vorgegebenen Stellungen zumindest ein Fluss von Milch an- und abschaltbar und/oder veränderbar und ein Fluss von Luft an- und abschaltbar und/oder veränderbar ist,
**dadurch gekennzeichnet, dass**
die Abgabevorrichtung (10) einen Antriebsmotor (25) zum Verstellen der Reglerachse (22) des Ventils (21) und eine Steuervorrichtung (35) zum Steuern des Antriebsmotors (25) aufweist, wobei die Reglerachse (22) durch Steuern des Antriebsmotors (25) mittels der Steuervorrichtung (35) in die jeweiligen vorgegebenen Stellungen bringbar ist.

2. Abgabevorrichtung (10) nach Anspruch 1, wobei eine Antriebsachse (26) des Antriebsmotors (25) über eine lösbare Verbindung (23) an die Reglerachse (26) gekoppelt ist.

3. Abgabevorrichtung (10) nach Anspruch 2, wobei die Mischeinrichtung (11) nach Lösen der lösbaren Verbindung (23) als Ganzes von den übrigen Teilen der Abgabevorrichtung (10) entfernbar ist.

4. Kaffeemaschine (1) mit einem Kaffeeauslaufkopf (4) zur Abgabe eines Kaffeegetränks und einer Abgabevorrichtung (10) nach einem der Ansprüche 1-3.

5. Kaffeemaschine (1) nach Anspruch 4, wobei die Mischeinrichtung (11) der Abgabevorrichtung (10) an einer Aussenseite eines Gehäuses (2) der Kaffeemaschine (1) angeordnet ist.

6. Kaffeemaschine (1) nach Anspruch 5, wobei der Kaffeeauslaufkopf (4) an der Aussenseite des Gehäuses (2) der Kaffeemaschine (1) angeordnet ist und die Abgabevorrichtung (10) am Kaffeeauslaufkopf (4) befestigt ist.

7. Kaffeemaschine (1) nach Anspruch 6, wobei der Kaffeeauslaufkopf (4) ein Gehäuse (5) umfasst und die Mischeinrichtung (11) in diesem Gehäuse (5) untergebracht ist.

8. Kaffeemaschine (1) nach einem der Ansprüche 5 - 7, wobei die Mischeinrichtung (11) von der Aussenseite des Gehäuses (2) der Kaffeemaschine (1) her zugänglich und als Ganzes von der Kaffeemaschine (1) separierbar ist.

9. Kaffeemaschine (1) nach einem der Ansprüche 6 - 8, wobei der Kaffeeauslaufkopf (4) und die Abgabevorrichtung (10) relativ zum Gehäuse (2) der Kaffeemaschine (1) bewegbar angeordnet sind und eine Höhenlage des Kaffeeauslaufkopfes (4) und eine Höhenlage der Abgabevorrichtung (10) simultan veränderbar sind.

10. Kaffeemaschine (1) nach einem der Ansprüche 5 - 9, wobei der Antriebsmotor (25) im Innern des Gehäuses (2) der Kaffeemaschine (1) angeordnet ist und die Antriebsachse (26) des Antriebsmotors (25) und/oder die Reglerachse (22) und/oder ein die Antriebsachse (26) und die Reglerachse (22) verbindendes Getriebe oder eine die Antriebsachse (26) und die Reglerachse (22) verbindende Kupplung durch eine Öffnung (2.1) im Gehäuse (2) der Kaffeemaschine (1) ragt.

11. Kaffeemaschine (1) nach einem der Ansprüche 4 - 10, wobei mittels der Steuervorrichtung (35) die Abgabe eines Kaffeegetränks veranlassbar ist und die Reglerachse (22) vor, während oder nach der Abgabe des Kaffeegetränks in mindestens eine der vorgegebenen Stellungen bringbar ist.

12. Kaffeemaschine (1) nach Anspruch 11, wobei die Steuervorrichtung (35) derart ausgebildet ist, dass die Reglerachse (22) vor, während oder nach der Abgabe des Kaffeegetränks zeitlich nacheinander in verschiedene vorgegebene Stellung bringbar ist.
